# EUROPEAN PATENT APPLICATION

(11) **EP 4 711 933 A1**
(43) Date of publication of application: **18.03.2026**
(21) Application number: 24199924.2
(22) Date of filing: 12.09.2024
(51) Int. Cl.: G06F 11/3668, H04L 9/40

(54) **APPARATUS, EMBEDDED SOFTWARE APPLICATION, DATA CARRIER, COMPUTER PROGRAM, AND METHOD FOR FUZZ TESTING EMBEDDED SOFTWARE APPLICATIONS**

(71) Applicant: AUMOVIO Germany GmbH, 60488 Frankfurt am Main (DE); Nanyang Technological University, Singapore 639798 (SG)
(72) Inventor: Zheng, Yaowen, 639798 SINGAPORE (SG); Ge, Jingquan, 639798 SINGAPORE (SG); Liu, Yang, 639798 SINGAPORE (SG); Mahbub, Sheikh Habib, 30175 Hannover (DE); Byman, Gabriel Wayne, 90590 Oulu (FI); Waitz, Elisabeth Margerita, 91058 Erlangen (DE); Kakkolangara, Praveen, 339780 Singapore (SG)
(74) Representative: Aumovio Corporation

(57) **Abstract**

Embodiments of the present disclosure relate to an apparatus, an embedded software application, a data carrier, a computer program, and a method for fuzz testing embedded software applications. The method comprises identifying, from a plurality of keywords, network user input (NUI) keywords related to network user inputs. Also, the method comprises providing the identified keywords as seed for fuzz testing an embedded software application and testing the software based on the seed.

## Description

Embodiments of the present disclosure relate to an apparatus, an embedded software application, a data carrier, a computer program, and a method for fuzz testing embedded software applications. In particular, the proposed concept relates to techniques for generating seed for fuzz testing, for mutating seed, and for identifying injection attack vulnerabilities in embedded software applications.

Fuzz testing, also known as fuzzing, is an efficient technique for discovering vulnerabilities. When applied to embedded devices, emulating the tested program within embedded firmware and using fuzz testing proves to be an effective approach. Representative tools such as Firm-AFL, EQUAFL, and Greenhouse exemplify this approach. Firm-AFL achieves efficient and accurate execution of embedded programs by combining system-mode emulation with user-mode emulation. EQUAFL executes embedded programs thoroughly in user-mode emulation but relies on system-mode emulation to obtain contextual information before executing the target application in the fuzzing process. Greenhouse, on the other hand, patches problematic areas in the execution process of embedded programs, ensuring smooth program execution. While these tools devoted significant efforts in securing the execution of embedded programs, they still utilize general fuzz testing techniques such as AFL/AFL++ on the fuzz testing side. For embedded software applications, the testing case generation mechanism of AFL/AFL++ may result in low-quality test cases generation during the fuzzing process and subsequently reducing the efficiency of vulnerability detection.

Hence, there is a demand for an improved concept for fuzz testing embedded software applications.

This demand may be satisfied by the subject-matter of the appended independent claims. Optional embodiments are disclosed in the appended dependent claims.

Embodiments of the present disclosure provide a method for fuzz testing embedded software applications. The method comprises identifying, from a plurality of keywords, network user input (NUI) keywords related to network user inputs. Also, the method comprises providing the identified keywords as seed for fuzz testing an embedded software application and testing the software based on the seed.

This allows to detect vulnerabilities much faster than other approaches which are not specifically adapted to consider peculiarities of embedded software applications such as network user input, like, for example, EQUAFL with AFL/AFL++. Additionally, the proposed approach can achieve higher code coverage than such other approaches (AFL and AFL++). Therefore, the proposed approach provides a more suitable so-called "fuzzer" for detecting vulnerabilities in embedded applications.

In some embodiments, identifying network user input keywords comprises excluding keywords which are not related to network user input. This allows a lightweight approach which may require less computational costs and may lead to less false positives/negatives than, e.g., traditional taint analysis. In practice, the software application's control flow and data flow may be quite complex, with many loop structures. If traditional taint analysis is used to precisely determine whether network input propagates to comparisons with keywords, it may continuously analyze various branches and loops, potentially leading to non-termination. The proposed approach provides a more targeted concept to reduce and/or avoid those shortcomings.

In some embodiments, identifying the network user input keywords comprises determining whether a keyword is not to be used in a critical comparison function of the software. In this way, NUI keywords which are applied in critical comparison functions may be identified.

To this end, proposed method may comprise determining whether no control dependency exists between an address of the critical comparison function and an address of the keyword.

In some embodiments, determining whether no control dependency exists comprises obtaining a function call chain to the address of the keyword, wherein the function call chain includes one or more sub-functions, identifying parent functions of the sub-functions, and checking whether no control dependencies between the parent functions and the critical comparison function. In this way, direct as well as indirect control dependencies may be identified such that NUI keywords with indirect influence on critical comparison functions may be identified.

In some embodiments, testing the software based on the seed comprises applying a mutation to the seed. In doing so, the seed related to the network user input keywords may be prioritized over other seeds no related to the network user input keywords. So, the seed related to the network user input keywords may be mutated earlier and/or more of the other seeds. As a result, the network user input keywords may be inserted earlier into correct positions, thereby accelerating the breakthrough of critical paths (e.g., because the network user input keywords meet specific format and/or value requirements to be inserted).

In particular, the proposed method may comprise testing the embedded software application comprises testing one or more injection points for injection attacks based on the seed related to the network user input keywords. In doing so, injection attack vulnerabilities may be detected more reliably and/or more efficiently.

In some embodiments, the method further comprises providing a test result based on testing the software based on the seed and adapting the embedded software application based on the test result to reduce vulnerabilities. In doing so, the identified vulnerabilities may be fixed for a higher level of security.

Further embodiments may provide a computer program comprising instructions which, when the computer program is executed by a computer, cause the computer to carry out an embodiment of the proposed method.

Still further embodiments may provide a computer-readable data carrier having stored thereon the proposed computer program.

Other embodiments provide an embedded software application obtainable by an embodiment of the proposed method.

Further embodiments provide an apparatus comprising one or more interfaces for communication and a data processing circuit configured to execute an embodiment of the proposed method.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

- Fig. 1: shows a flow chart schematically illustrating an embodiment of a method for fuzz testing embedded software applications;
- Fig. 2: shows a block diagram schematically illustrating an embodiment of an architecture implementing the proposed approach;
- Figs. 3 and 4: show exemplary pseudocodes illustrating an exemplary filtering of NUI keywords; and
- Fig. 5: shows a block diagram schematically illustrating an apparatus according to the proposed approach.

Fuzz testing, or fuzzing, is a software testing technique that involves providing invalid, unexpected, or random data as inputs to a computer program to identify bugs, crashes, or security vulnerabilities. The process typically starts with a set of seed inputs, which are then mutated to explore a wide range of program behaviors.

Obtaining effective seed keywords is crucial for successful fuzzing. These seeds can be derived from various sources, such as analyzing the target application's documentation to extract common commands and parameters, reviewing existing test cases, or examining user inputs captured in logs and network traffic. Static analysis tools can also be employed to parse the codebase and identify functions, variables, and constants that accept or influence input. Combining these sources helps build a comprehensive database of keywords that reflect real-world usage and potential edge cases.

Once the seed inputs are gathered, fuzzers apply mutations to generate new test cases. Mutation strategies may include altering data types, modifying lengths (e.g., inserting very long strings), flipping bits, shuffling characters, or injecting special characters and formats. The goal is to produce inputs that can traverse untested code paths, trigger unexpected behaviors, or expose hidden vulnerabilities. By systematically and randomly altering the seed inputs, fuzz testing aims to uncover issues that conventional testing methods might miss.

Currently, in the domain of greybox fuzzing for embedded applications, the majority of efforts are directed towards addressing issues related to program emulation or rehosting. On the fuzzer side, widely used tools include AFL and AFL++ were integrated into these techniques. However, such tools may require a lot of computational costs and time.

Embodiments of the present disclosure are based on the finding that network user input may reach deep paths in embedded software applications because it often triggers complex sequences of operations that span multiple layers of the system.

When input is received from a network, the software parses, validates, and interprets the data, which can involve accessing and modifying internal states, interacting with hardware components, and updating critical system functions. This input can initiate processes that touch various subsystems, from communication protocols to sensor management and data processing. The need to process and respond to potentially unpredictable or asynchronous network input means that the software must navigate deeply embedded logic and control paths to fulfill the intended actions, making these inputs highly influential throughout the application's architecture. One idea of the proposed concept is, therefore, to specifically use network user input for fuzz testing embedded software applications. To this end, it is proposed to test the embedded software application specifically based on keywords related to network user input in order to efficiently reach deep states of the program and, thus, identify critical vulnerabilities.

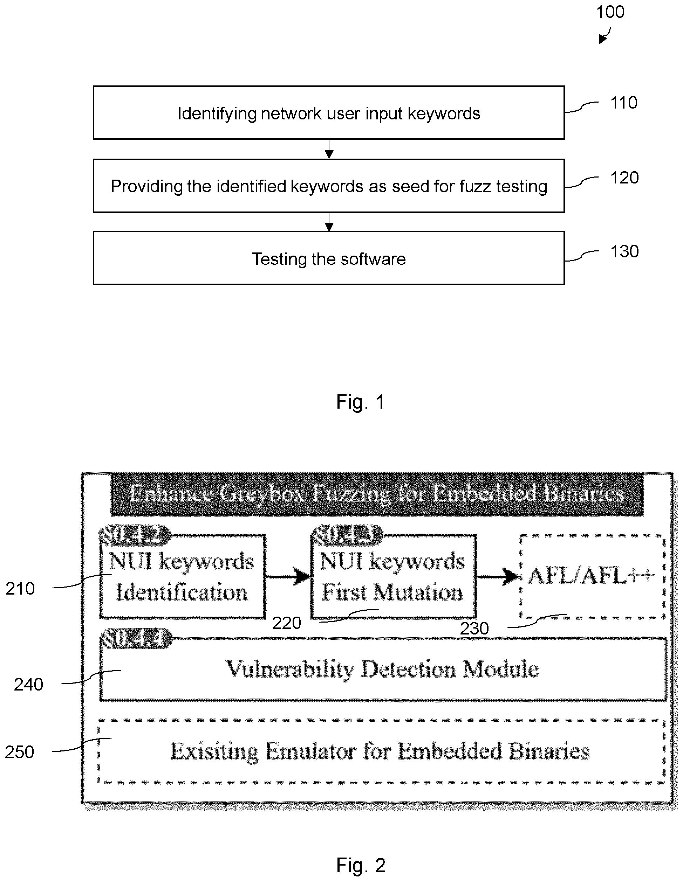

Further details are now described below with reference to an exemplary embodiment of a method for fuzz testing embedded software applications, as shown in Fig. 1.

Fig. 1 shows a flow chart schematically illustrating an embodiment of a method 100 for fuzz testing embedded software applications.

The method 100 comprises identifying 110, from a plurality of keywords, network user input (NUI) keywords related to network user inputs.

Network user input (keywords) in the context of embedded software applications may refer to data or commands sent from external sources, such as other devices or users, over a network to control or interact with an embedded system. In automotive applications, this could include a driver adjusting climate settings via a mobile app that communicates with the vehicle's Heating, Ventilation, and Air Conditioning (HVAC) system, a remote server sending over-the-air (OTA) updates to the vehicle's firmware, or a vehicle-to-vehicle (V2V) communication system exchanging safety information like speed or position data to assist with collision avoidance. These inputs are crucial for enabling connectivity, remote management, and advanced functionalities in modern vehicles and may, therefore, undergo a lot of processing deep in embedded software applications in vehicles.

Method 100 further suggests providing 120 the identified keywords as seed for fuzz testing an embedded software application, and testing 130 the software based on the seed.

Keywords for seeding fuzz testing can be obtained by analyzing various sources related to a target application, here the embedded software application. This may include examining documentation, user manuals, and Application Programming Interface (API) descriptions to identify common inputs and commands. Obtaining keywords for fuzz testing may also include reviewing source code and/or binary analysis, parameters, or data formats used within the software. Additionally, keywords may be obtained from network traffic or monitoring file interactions during operation. The keywords may, then, be used as seed/s for fuzz testing.

However, for arbitrary keywords as seeds, it may be very costly in terms of computing resources and time to reach deep states of the embedded software application to identify vulnerabilities. In contrast, the network user input keywords may efficiently guide the fuzz testing to deeper states than an arbitrary set of keywords.

In fuzz testing 130, the NUI keywords are used to generate or mutate inputs that are fed into the embedded software application to be tested. These keywords may represent common or significant inputs, commands, or data formats relevant to the application. By incorporating these keywords, a fuzzing tool can create test cases that closely resemble real-world input scenarios, increasing the chances of triggering bugs or vulnerabilities.

Accordingly, the proposed solution allows to detect vulnerabilities faster and more reliably, and provides a larger code coverage than approaches not specifically adapted to embedded software applications like, e.g., AFL/AFL++.

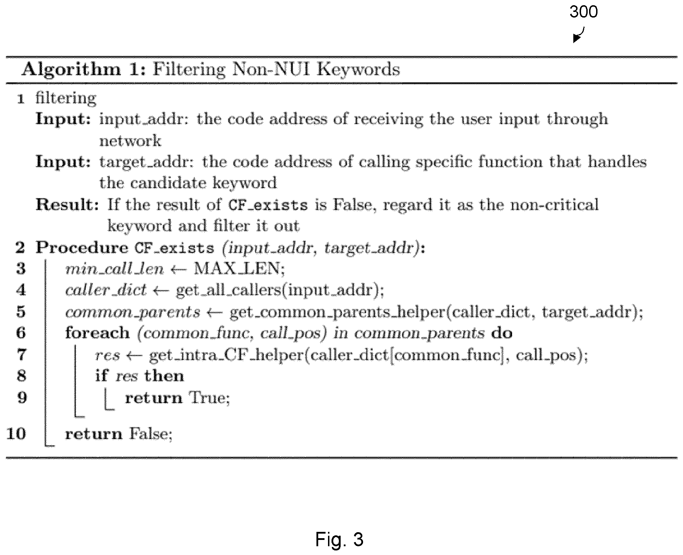

Further details are outlined below in more detail with reference to Figs. 2 and 3 including pseudocode illustrating code examples for implementing the proposed approach.

Fig. 2 shows a block diagram schematically illustrating an embodiment of an architecture implementing the proposed approach. As shown, such architecture may include modules for NUI keywords identification (see block 210), a mutation strategy (see block 220) based on the NUI keywords,

To identify (strings) keywords that are related to network user input, it is proposed to perform, e.g., taint analysis on the keywords themselves to determine if they are passed into critical comparison functions (e.g., strcmp). Keywords that pass this analysis are considered candidates and the address of calling such comparison function is denoted as *target_addr.* For this, it may be assessed whether network user input keywords "flow into" critical functions associated with *target_addr.* Due to the computational cost and potential false positives/negatives of such analysis, a lightweight approach may be adopted to exclude keywords that are definitely not related to network user input. So, in other words, identifying network user input keywords comprises excluding keywords which are not related to network user input, e.g., by determining whether a keyword is not to be used in a critical comparison function of the software.

This may involve considering scenarios where multiple string operations occur before user input, which likely involve comparisons in comparison functions with other content (e.g., file contents). To achieve this, examples suggest employing a monitoring approach to determine a program location (denoted as *input_addr*) of the network input.

For identifying NUI keywords, it may be assessed whether there exists control dependence from *input_addr* to *target_addr.* If not existing, the candidate (keyword) is not related to network user input, and is regarded as so-called "Non-NUI-Keyword", and retain the rest of the keywords as candidates for the latter seed mutation.

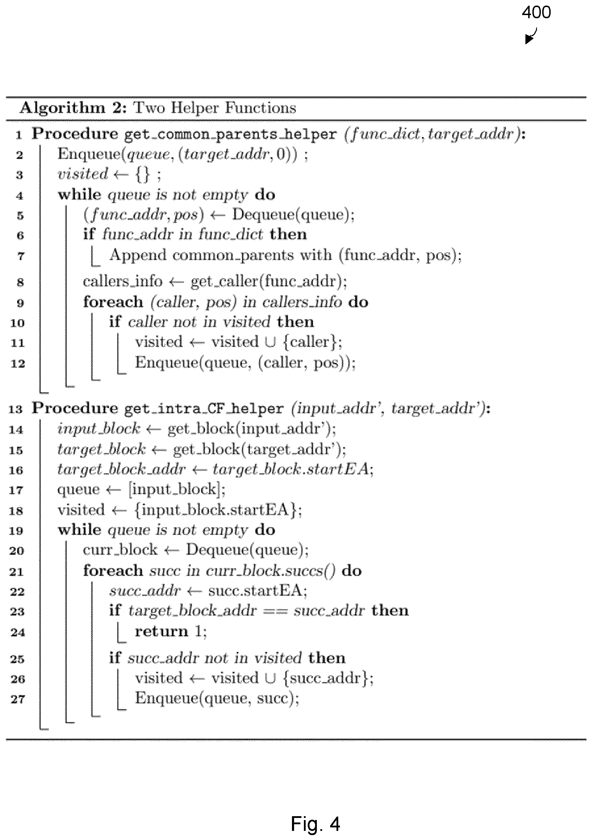

Algorithm 1 (see Fig. 3, reference numeral 300) outlines the workflow for determining whether there exists control flow from *input_addr* to *target_addr.* Firstly, a function call chain (e.g., a sequence of function calls that occur during the execution of the embedded software application and/or path of execution through various functions in the code.) to *input_addr* is obtained. The function call chain includes one or more sub-functions. In practice, the function call chain may be stored in a dictionary structure where a key of the dictionary structure is the function starting address of of a function caller and a value of dictionary structure is the address of calling sub-function in the function call chain (line 4). Then, it is proposed to identify (all) common parent functions of the sub-functions for both *input_addr* and *target_addr* (line 5) which is explained in more detail below with reference to Fig 4. In practice, a common parent function of two or more functions is a function which calls the two or more functions. For example, if function A calls function B, and function A calls function C, then function A is a common parent function of functions B and C.

Fig. 4 shows a pseudocode of two so-called "helper functions" one of which for identifying common parent functions (see Fig. 4, Algorithm 2, reference numeral 400, lines 1 to 12). After that, it is proposed to analyze the common parent nodes. Such intro-function control flow analysis includes examining whether there is a control dependency in a parent node/parent function from *input_addr* to *target_addr.* If at least one parent function meets the criteria (e.g., exhibits a control dependency from *input_addr* to *target_addr*), the existence of a control dependency relationship is assumed.

Algorithm 2 shows the process of both identifying common parent functions and conducting intra-function control flow analysis in the common parent functions. For the identification of common parent functions, a breadth-first search algorithm is employed to traverse (all) predecessor functions along the function call chain. During this traversal, for each encountered function (*func_addr*), a starting address of the parent function (caller) and a code position (pos) where *func_addr* is called (line 12) is obtained and/or stored. Simultaneously, it is proposed to determine whether it is a common parent node/parent function for *input_addr* by comparing with dictionary structure *func_dict* that stores all parent functions of *input_addr* (Algorithm 2, line 7). Concerning the intra-function control flow analysis, when calling points (*input_addr'*, *target_addr'*) of *input_addr* and *target_addr* within a function of the function call chain are obtained, a breadth-first search algorithm is utilized/applied to traverse successor blocks of a block containing *input_addr'.* A (code) block comprises or corresponds to a set of instructions executed sequentially, where the instructions within the code block are executed in order without any branching or jumps. If there are branches or jumps, it does not qualify as one code block. The control flow analysis aims to ascertain whether it is possible to reach *target_addr'* from *input_addr'* via control flow. If the traversal succeeds in reaching *target_addr'* from *input_addr',* it is assumed that there exists a control flow from *input_addr* to *target_addr.*

If none of them meet the criteria (e.g., exhibits a control dependency from *input_addr* to *target_addr*), it is assumed that the function call chain does not exhibit a control dependency relationship between *input_addr* to *target_addr.* In such cases, they are excluded as non-NUI (Network User Input related) keywords.

The network user input keywords, then, may be used as input to force testing, e.g., as seed. In doing so, the network user input keywords may be prioritized over other input in order to efficiently reach deep states of the software under test and, thus, effectively identify injection vulnerabilities.

To this end, a specific seed mutation mechanism that incorporates these NUI keywords may be applied. Embodiments of the present disclosure are based on the finding that, e.g., service programs in embedded systems often have specific syntactic requirements when parsing network inputs. When certain conditions are met at specific positions in the input (such as the TARGET URI in an HTTP message requiring a specific service name), the program dispatches corresponding functions for in-depth parsing, leading to deeper program states. However, traditional AFL techniques, starting with bit flips and arithmetic operations, may not efficiently discover such paths. The present disclosure therefore suggests a mutation strategy prioritizing (the utilization of) NUI keywords in test case generation, placing other deterministic mutation strategies afterward. Specifically, when the mutation process begins, it is proposed to use NUI keywords to insert and overwrite the current seed. This may ensure that NUI keywords are quickly inserted into a position, so when the software application parses the input at that position, it will compare ' the input with the NUI keyword, thereby executing a new path..

Aside from overflow vulnerabilities, command injection ranks as one of the most prevalent vulnerabilities in embedded systems. Therefore, the present disclosure suggests an emulation-based approach for detecting command injection vulnerabilities.

More specifically, embodiments suggest testing one or more injection points for injection attacks based on the seed related to the network user input keywords.

To this end, on the fuzzer side, it is proposed to incorporate specific strings that are distinctly different from (normal) command(s) strings into the (keyword) dictionary structure. A specific string refers to a string that is hard-coded in the software application and is used for comparison with user input. Once matched, it usually directs the software application to execute a new path. In contrast, other command strings are typically used as arguments, e.g., for the execve system call and do not trigger a new path.

During the mutation and testing phase, the fuzzer will randomly assemble the special/specific string into the input for testing. Concurrently, it is proposed to instrument an emulation (see Fig. 2) to dynamically monitor key functions (e.g., execve) where command injection might occur. If the executed command is detected to contain these specific strings, it is considered as detecting a command injection vulnerability. For example, the emulation is configured such that, when a system call is executed, a CPU instruction loop exits a translation execution process. At this point in the code, the system call number is captured. If the system call number matches execve, current parameter information is retrieved. If the parameter is a specific string, it can be considered that the fuzz testing has injected a command.

The test result may be, then, used for debugging or fixing vulnerabilities, particularly injection vulnerabilities, of the embedded software under test. In doing so, the security of the embedded software (e.g., against injection attacks) may be improved. For this, the test result may be provided to a user or algorithm for debugging and/or eliminating vulnerabilities of the embedded software under test based on the test result.

Embodiments of the present disclosure may provide such tested and debugged/fixed embedded software.

The invention can be applied in several scenarios: For embedded device vendors, the developing teams can integrate the invention to their security team as a guarantee for the quality and security of the developed IoT system and applications. The usage scenario is, when the development of an IoT application is completed, it can be compiled into binaries and go through the testing using our invention before releasing it to the public. In addition to the source code audit, the invention can also help the firmware developing teams to prevent security vulnerabilities in the final firmware version. For the software testing teams, they can use the invention as a tool for testing the application in IoT (Internet-of-Things) firmware without the source code. This means that the testing team can help detect overflow and command injection vulnerabilities among a large-scale Linux-based IoT firmware without the support of vendors. For software security companies, this invention can be integrated into their existing dynamic analysis tools as a new feature, allowing them to quickly find bugs/vulnerabilities inside embedded binaries. To summarize, device vendors can use the invention to enhance the security and robustness of their firmware which is developed based on Linux, while software security companies can use this invention to broaden their business scope by including efficient fuzzing techniques for IoT firmware and applications.

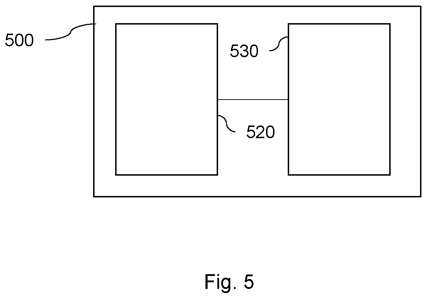

Further embodiments provide an apparatus as outlined in more detail below with reference to Fig. 5.

Fig. 5 shows a block diagram schematically illustrating an embodiment of such an apparatus 500. The apparatus comprises one or more interfaces 510 for communication and a data processing circuit 520 configured to execute the proposed method.

In embodiments, the one or more interfaces 510 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 520 may correspond to or comprise any type of programable hardware. So, examples of the data processing circuit 520, e.g., comprise a memory, microcontroller, field programable gate arrays, one or more central, and/or graphical processing units. To execute the proposed method, the data processing circuit 520 may be configured to access or retrieve an appropriate computer program for the execution of the proposed method from a memory of the data processing circuit 520 or a separate memory which is communicatively coupled to the data processing circuit 520.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for fuzz testing embedded software applications, the method (100) comprising:
identifying (110), from a plurality of keywords, network user input keywords related to network user inputs;
providing (120) the identified keywords as seed for fuzz testing an embedded software application;
testing (130) the software based on the seed.

2. The method (100) of claim 1, wherein identifying network user input keywords comprises excluding keywords which are not related to network user input.

3. The method (100) of claim 1 or 2, wherein identifying the network user input keywords comprises determining whether a keyword is not to be used in a critical comparison function of the software.

4. The method (100) of claim 3, wherein determining if a keyword is not to be used in a critical comparison function comprises determining whether no control dependency exists between an address of the critical comparison function and an address of the keyword.

5. The method (100) of claim 4, wherein determining whether no control dependency exists comprises:
obtaining a function call chain to the address of the keyword, wherein the function call chain includes one or more sub-functions;
identifying parent functions of the sub-functions; and
checking whether no control dependencies between the parent functions and the critical comparison function.

6. The method (100) of any one of the preceding claims, wherein testing the software based on the seed comprises applying a mutation to the seed, wherein the seed related to the network user input keywords is prioritized over other seeds not related to the network user input keywords.

7. The method (100) of any one of the preceding claims, wherein testing the embedded software application comprises testing one or more injection points for injection attacks based on the seed related to the network user input keywords.

8. The method (100) of any one of the preceding claims, wherein the method (100) further comprises:
providing a test result based on testing the software based on the seed; and
adapting the embedded software application based on the test result to reduce vulnerabilities.

9. A computer program comprising instructions which, when the computer program is executed by a computer, cause the computer to carry out the method (100) of any one of the claims 1 to 8.

10. A computer-readable data carrier having stored thereon the computer program of claim 8.

11. An embedded software application obtainable by a method (100) according to the claims 1 to 8.

12. An apparatus (500) comprising:
one or more interfaces (510) for communication; and
a data processing circuit (520) configured to execute the method (100) of any one of the claims 1 to 8.
